# DEMANDE DE BREVET EUROPEEN

(11) **EP 1 110 699 A1**
(43) Date de publication de la demande: **27.06.2001**
(21) Numéro de dépôt: 00403532.5
(22) Date de dépôt: 14.12.2000
(51) Int. Cl.: B29C 51/08, B29C 65/08, B29C 51/30, B60N 3/04, B29L 31/58

(54) **Presse de thermoformage pour la mise en forme de tapis, en particulier de tapis de sol pour automobiles**

(30) Priorité: 15.12.1999 FR 9916022
(71) Demandeur: S.A.R.L. Polymat, 44780 Missilac (FR)
(72) Inventeur: Bost, Jean-Rémy, 44160 Pontchateau (FR)
(74) Mandataire: Michelet, Alain

(57) **Abrégé**

Cette presse de thermoformage comprend un plateau inférieur (2) sur lequel est fixé l'élément de moule inférieur (4), et un plateau supérieur (7) sur lequel est fixé l'élément de moule supérieur (8), les deux plateaux inférieur (2) et supérieur (7) étant mobiles verticalement l'un par rapport à l'autre.
Conformément à l'invention, cette presse comprend, aménagé dans l'élément de moule inférieur (4) et/ou dans l'élément de moule supérieur (8), des moyens qui permettent le soudage sur le tapis (12) d'une pièce complémentaire rapportée (14), par exemple une pièce d'usure genre talonnette.
Ces moyens consistent avantageusement en au moins une électrode de soudage par ultrasons (15, 16) dont la partie active (17, 18) qui est conformée selon la pièce (14) à souder constitue une zone de la face active (8') de l'un des éléments de moule (8).

Application à la mise en forme de tapis de sol pour véhicules automobiles.

## Description

La présente invention concerne une presse de thermoformage permettant la mise en forme de tapis de sol pour automobiles.

Le plancher de l'habitacle des automobiles est très généralement recouvert par un tapis qui consiste en une moquette dont l'embase est en matériau thermoformable et qui est conformé au préalable en fonction des reliefs qu'il doit épouser.
Ce tapis est en principe fabriqué de la manière suivante :
Après passage dans un four pour assurer son ramollissement, le flan de moquette est placé dans une presse de mise en forme, constituée de deux éléments de moule complémentaires portés par des plateaux mobiles verticalement l'un par rapport à l'autre.
Comme l'opération de thermoformage est très généralement réalisée sur une pièce adaptée pour recouvrir l'intégralité du plancher du véhicule, le flan conformé est ensuite découpé en deux pour obtenir la partie avant et la partie arrière de tapis.
La face supérieure de la partie avant reçoit les pièces d'usure (talonnette côté conducteur, repose-pied ... etc) par une technique de soudage haute fréquence (voir US-A-5 925 304) ou au moyen d'une technique de soudage par ultrasons (voir Patent Abstracts of Japan, vol. 018, n° 602).
Une mousse insonorisante est ensuite injectée sur la face inférieure des différentes parties de tapis et une opération ultime de détourage assure la finition des contours et la réalisation des orifices ou découpes complémentaires nécessaires notamment à la fixation des sièges.

Ces opérations successives sont réalisées sur des machines indépendantes et beaucoup de manipulations manuelles sont nécessaires entre les différents postes ou éléments de la chaîne.

Le but de la présente invention est de diminuer l'investissement machine nécessaire à la fabrication de ce genre de tapis, et d'assurer des gains de temps et de productivité dans ce domaine technique. Plus précisément, le but de la présente invention est de perfectionner la presse de thermoformage pour regrouper sur une même machine des fonctions qui étaient jusqu'à maintenant mises en oeuvre de manière indépendante.

La presse de thermoformage objet de la présente invention est du type constituée d'un plateau inférieur sur lequel est fixé l'élément de moule inférieur, et d'un plateau supérieur sur lequel est fixé l'élément de moule supérieur, les deux plateaux inférieur et supérieur étant mobiles verticalement l'un par rapport à l'autre. Conformément à l'invention, cette presse comprend, aménagés dans l'élément de moule inférieur et/ou dans l'élément de moule supérieur, des moyens qui permettent le soudage sur le tapis d'une pièce complémentaire rapportée, par exemple une pièce d'usure genre talonnette.

Toujours selon l'invention, cette presse de thermoformage comprend au moins une électrode de soudage par ultrasons dont la partie active qui est conformée selon la pièce à souder constitue une zone de la face active de l'un des éléments de moule.

Toujours selon l'invention, la ou les électrodes de soudage par ultrasons sont portées par un ou plusieurs vérins adaptés pour appliquer la pression nécessaire au soudage.

Le ou les vérins supports d'électrode(s) peuvent être montés directement sur l'élément de moule correspondant mais, pour des raisons de simplification de matériel, ils sont de préférence montés sur le plateau de réception de l'élément de moule.

Selon une autre disposition de l'invention, l'élément de moule en regard de celui muni de la ou des électrodes de soudage comporte des moyens en forme d'enclume aptes à supporter la pression appliquée par ladite ou lesdites électrodes au moment de l'opération de soudage.

Selon une autre caractéristique, l'élément de moule en regard de celui muni de la ou des électrodes de soudage comporte des moyens qui permettent de maintenir en position la pièce complémentaire rapportée avant les opérations de thermoformage et de soudage. Ces moyens consistent avantageusement en un système d'aspiration du type ventouse(s) aspirante(s).

Selon une forme de réalisation préférée, le ou les vérins supports d'électrodes sont solidaires du plateau supérieur de la presse et les moyens de maintien en position de la pièce complémentaire rapportée sont aménagés dans l'élément de moule inférieur.

Selon une autre disposition de l'invention, la presse intègre des moyens qui permettent la découpe du tapis en deux parties lorsque les deux éléments de moule sont en pression l'un contre l'autre. Ces moyens de découpe sont de préférence solidaires du plateau supérieur de la presse et l'élément de moule supérieur est aménagé pour permettre l'accès de ces moyens de découpe au tapis thermoformé.

Mais l'invention sera encore illustrée, sans être aucunement limitée, par la description suivante d'un mode de réalisation particulier, donné uniquement à titre d'exemple et représenté sur les dessins annexés, dans lesquels :
- la figure 1 est une représentation schématique d'une presse de thermoformage conforme à l'invention, les deux éléments de moule supérieur et inférieur étant en position inactive, espacés l'un de l'autre ;
- la figure 2 montre la même presse en position active de thermoformage, les deux éléments de moule supérieur et inférieur étant en pression l'un contre l'autre.

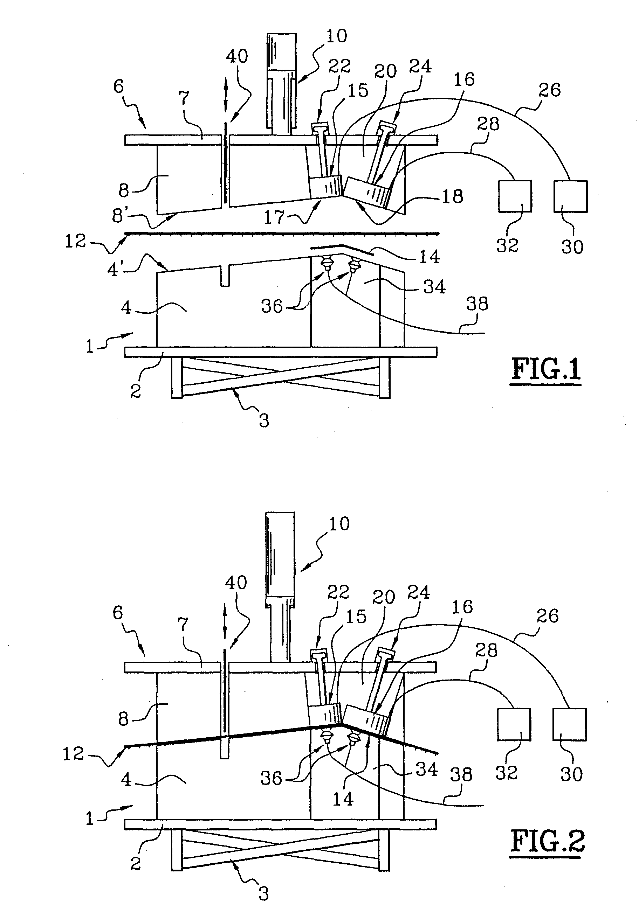

La presse de thermoformage illustrée sur les figures 1 et 2 permet la mise en forme de tapis de sol pour véhicules automobiles, en particulier des tapis constitués d'une moquette fixée sur une embase en matière thermoformable.

Cette presse se compose :
- d'une partie inférieure fixe 1, constituée d'un plateau inférieur 2 qui est porté par un châssis 3 et sur lequel est fixé un élément de moule inférieur 4, et
- d'une partie supérieure mobile 6 constituée d'un plateau supérieur 7 sur lequel est fixé un élément de moule supérieur 8.

Les éléments de moule 4 et 8 peuvent être réalisés en aluminium et ils sont de préférence solidarisés de manière amovible sur leur plateau support respectif 2 et 7. Cette dernière particularité permet le remplacement de chaque élément de moule pour permettre d'adapter la presse au type de tapis que l'on désire réaliser, en fonction notamment du modèle de véhicule à équiper.

Le plateau supérieur 7 et l'élément de moule associé 8 sont mobiles verticalement par l'intermédiaire d'un ou de plusieurs vérins de manoeuvre 10.

Les faces actives 4' et 8' des deux éléments de moule 4 et 8 sont disposées en vis-à-vis; ces faces actives 4' et 8' sont complémentaires et elles sont adaptées pour assurer par pressage la mise en forme d'une pièce de tapis 12, après un passage au four de cette pièce pour assurer son ramollissement.

Dans l'installation illustrée sur les figures 1 et 2, pour des raisons de simplification de représentation, la presse est adaptée pour conformer la pièce de tapis 12 en simple dièdre. En pratique, les faces actives 4' et 8' des éléments de moule en vis-à-vis sont bien plus complexes de manière à former les cuvettes, rebords ou retours nécessaires pour que le tapis épouse au mieux les reliefs du plancher du véhicule.

Les deux éléments de moule 4 et 8 sont avantageusement associés à des moyens de refroidissement classiques, non représentés, qui permettent d'abaisser rapidement la température de la pièce de tapis et de stabiliser sa forme dans le minimum de temps.

Cette presse de thermoformage intègre des moyens qui permettent le soudage sur la face externe de la pièce de tapis 12 d'une pièce complémentaire rapportée 14, cette pièce rapportée 14 pouvant consister en une talonnette en matière plastique fixée au niveau de l'emplacement des pieds du conducteur. Dans l'exemple de réalisation représenté, la pièce rapportée 14 est destinée à être fixée au niveau de la zone en dièdre des éléments de moule 4 et 8.
Les moyens de soudage correspondants consistent en des électrodes de soudage par ultrasons 15 et 16 (sonotrodes) dont la partie active, respectivement 17 et 18, constitue une zone de la face active 8' de l'élément de moule supérieur 8. Les électrodes de soudage 15 et 16 et leur partie active respective 17 et 18 sont disposées dans une ouverture 20 de forme adaptée prévue dans l'élément de moule 8. Ces électrodes 15 et 16 sont mobiles par rapport à l'élément de moule 8; elles sont portées par des vérins, respectivement 22 et 24, solidaires du plateau supérieur 7 et adaptés pour appliquer la pression nécessaire au soudage. Dans une variante de réalisation les vérins 22 et 24 peuvent directement être solidaires de l'élément de moule 8.

Chaque électrode 15 et 16 est connectée par une liaison 26, 28 à un générateur d'ultrasons 30, 32.

En regard des électrodes 15 et 16, l'élément de moule fixe 4 est aménagé pour supporter la pression appliquée par lesdites électrodes pour réaliser le soudage. Cet aménagement particulier est illustré sur les figures par la présence de moyens en forme d'enclume 34.

D'autre part, pour assurer un positionnement correct de la pièce rapportée 14 sur la partie active 4' de l'élément de moule 4, on prévoit dans celui-ci des moyens d'aspiration par dépression tels que des ventouses aspirantes 36. Cette ou ces ventouses 36 sont reliées à une centrale d'aspiration par les moyens de connexion repérés 38.

Une fois les deux éléments de moule 4 et 8 espacés l'un de l'autre (figure 1), on positionne correctement la pièce rapportée 14 sur l'élément de moule inférieur 4, sa face extérieure étant placée contre l'enclume 34; les ventouses aspirantes 36 assurent le maintien correct en place de cette pièce rapportée 14 pour éviter tout déplacement involontaire.
La pièce de tapis 12 qui a été préalablement ramollie par un passage au four est ensuite présentée entre les deux éléments de moule, sa face de dessus (côté moquette) étant orientée vers l'élément de moule inférieur 4. La mise en forme du tapis est réalisée de manière conventionnelle en abaissant l'élément de moule supérieur 8 et en pressant ce dernier contre l'élément de moule inférieur 4 (figure 2). La pression mise en oeuvre peut être de l'ordre de 1 bar et l'application de cette pression peut durer une trentaine de secondes.

Simultanément à cette opération de thermoformage, ou dans la continuité de cette opération, les électrodes de soudage 15 et 16 sont mises en oeuvre pour fixer la pièce rapportée 14 sur la pièce de tapis 12.
Cette opération de soudage par ultrasons est réalisée lorsque la pièce rapportée 14 et la pièce de tapis 12 sont en pression entre les deux éléments de moule 4 et 8, et en particulier entre la partie active 17, 18 des électrodes 15, 16 et l'enclume 34.
Ce soudage nécessite généralement une pression qui est supérieure à la pression de thermoformage ; cette pression supplémentaire est obtenue par mise en action des vérins supports 22 et 24.

Les matériaux en présence doivent bien entendu être adaptés pour permettre leur solidarisation par une technique de soudage aux ultrasons. Les électrodes utilisées et le type de générateur d'ultrasons sont aussi choisis en fonction des matériaux que l'on désire solidariser.

Dans le mode de réalisation illustré sur les figures 1 et 2, le soudage de la pièce rapportée 14 est réalisé au moyen de deux électrodes 15 et 16 solidaires du plateau supérieur mobile 7. Pour obtenir le même résultat, une seule électrode avec une partie active de forme adaptée pourrait être envisagée.
D'une manière générale, le nombre des électrodes, leur emplacement et la configuration de leur partie active sont adaptés selon la forme et le positionnement de la pièce rapportée.

Dans une variante de réalisation, la ou les électrodes de soudage peuvent être aménagées sur la partie inférieure fixe de la presse, les moyens en forme d'enclume 34 et les ventouses de positionnement 36 étant alors prévus au niveau de l'élément de moule supérieur.
D'autre part, on peut aussi envisager de rendre mobiles les deux parties de moule supérieure et inférieure, ou bien encore uniquement la partie inférieure de moule.

Le fait que la ou les électrodes de soudage soient solidaires de l'un des plateaux de la presse permet de simplifier la structure de l'élément amovible de moule correspondant. La partie ou les parties actives d'électrode(s) seront aussi de préférence amovibles pour rendre la presse polyvalente.
Les éléments de moule utilisés seront fonction du type de tapis que l'on désire fabriquer. L'ouverture ménagée dans leur face active sera adaptée selon la forme de la ou des parties actives d'électrode(s).

Comme la partie active de la ou des électrodes correspond à une zone de la face active du moule, la présence de ces électrodes ne perturbe pas l'opération de thermoformage.
La mise en action des vérins 22, 24 supports d'électrodes s'effectue lorsque les deux éléments de moule 4 et 8 sont en pression l'un contre l'autre ; cette mise en action peut entraîner un marquage de la pièce de tapis 12, mais ce marquage ne constituera pas un inconvénient esthétique du fait de sa présence côté envers.

La presse de thermoformage conforme à la présente invention peut aussi intégrer des moyens qui permettent la découpe du tapis en vue de séparer les parties avant et arrière destinées à recouvrir le plancher du véhicule.

Ces moyens de découpe 40 peuvent consister en une lame de coupe mécanique, en une lame chauffante, en des moyens de découpe par ultrasons ou encore par jets d'eau sous pression.
Dans le mode de réalisation illustré sur les figures 1 et 2, ces moyens de découpe 40 sont solidaires du plateau supérieur 7 et l'élément de moule supérieur 8 (éventuellement avec l'élément inférieur de moule 4) est aménagé pour permettre auxdits moyens de découpe 40 d'accéder au tapis 12.

Les moyens de découpe 40 sont actionnés lorsque les deux éléments de moule 4 et 8 sont en pression l'un contre l'autre, pendant ou juste après l'opération de thermoformage.
On notera que ces moyens de découpe peuvent être envisagés sur une presse de thermoformage dépourvue des moyens de soudage de la pièce complémentaire rapportée.

## Revendications

1. Presse de thermoformage pour la mise en forme de tapis, en particulier de tapis de sol pour automobiles, laquelle presse comprend un plateau inférieur (2) sur lequel est fixé l'élément de moule inférieur (4), et un plateau supérieur (7) sur lequel est fixé l'élément de moule supérieur (8), les deux plateaux inférieur (2) et supérieur (7) étant mobiles verticalement l'un par rapport à l'autre, caractérisée en ce qu'elle comprend, aménagés dans l'élément de moule inférieur (4) et/ou dans l'élément de moule supérieur (8), des moyens qui permettent le soudage sur le tapis (12) d'une pièce complémentaire rapportée (14), par exemple une pièce d'usure genre talonnette.

2. Presse selon la revendication 1, caractérisée en ce qu'elle comprend au moins une électrode de soudage par ultrasons (15, 16) dont la partie active (17, 18) qui est conformée selon la pièce (14) à souder constitue une zone de la face active (4', 8') de l'un des éléments de moule (4, 8).

3. Presse selon la revendication 2, caractérisée en ce qu'elle comporte au moins une électrode de soudage par ultrasons (15, 16) portée par un ou plusieurs vérins (22, 24) adaptés pour appliquer la pression nécessaire au soudage.

4. Presse selon la revendication 3, caractérisée en ce que le ou les vérins (22, 24) supports d'électrode(s) (15, 16) sont montés sur le plateau (7) de réception de l'élément de moule correspondant (8).

5. Presse selon l'une quelconque des revendications 2 à 4, caractérisée en ce que l'élément de moule (4) en regard de celui (8) muni de la ou des électrodes de soudage (15, 16) comporte des moyens en forme d'enclume (34) aptes à supporter la pression appliquée par ladite ou lesdites électrodes (15, 16) au moment de l'opération de soudage.

6. Presse selon l'une quelconque des revendications 2 à 5, caractérisée en ce que l'élément de moule (4) en regard de celui (8) muni de la ou des électrodes de soudage (15, 16) comporte des moyens (36) permettant de maintenir en position la pièce complémentaire rapportée (14) avant les opérations de thermoformage et de soudage.

7. Presse selon la revendication 6, caractérisée en ce que les moyens de maintien en position de la pièce complémentaire rapportée (14) consistent en un système d'aspiration du type ventouse(s) aspirante(s) (36).

8. Presse selon l'une quelconque des revendications 2 à 7, caractérisée en ce que le ou les vérins (22, 24) supports d'électrodes (15, 16) sont solidaires du plateau supérieur (7) et en ce que les moyens (36) de maintien en position de la pièce complémentaire rapportée (14) sont aménagés dans l'élément de moule inférieur (4).

9. Presse selon l'une quelconque des revendications 1 à 8, caractérisée en ce qu'elle comporte des moyens (40) adaptés pour permettre la découpe du tapis en deux parties lorsque les deux éléments de moule (4, 8) sont en pression l'un contre l'autre.

10. presse selon la revendication 9, caractérisée en ce qu'elle comporte des moyens de découpe (40) solidaires du plateau supérieur (7) et en ce que l'élément de moule supérieur (8) est aménagé pour permettre l'accès desdits moyens de découpe (40) au tapis thermoformé (12).
